# EUROPÄISCHE PATENTSCHRIFT

(11) **EP 1 013 528 B1**
(45) Veröffentlichungstag und Bekanntmachung des Hinweises auf die Patenterteilung: **11.04.2007**
(21) Anmeldenummer: 99121615.1
(22) Anmeldetag: 30.10.1999
(51) Int. Cl.: B60T 8/48, B60T 13/68

(54) **Hydraulische Bremsanlage**
Hydraulic brake system
Système de freinage hydraulique

(30) Priorität: 23.12.1998 DE 19859737
(43) Veröffentlichungstag der Anmeldung: 28.06.2000
(73) Patentinhaber: WABCO GmbH, 30453 Hannover (DE)
(72) Erfinder: Lülfing, Ralph-Carsten, 30826 Garbsen (DE)
(74) Vertreter: Schrödter, Manfred

(56) Entgegenhaltungen:
- WO-A-97/14592
- WO-A-97/21574
- DE-A- 4 445 401
- DE-C- 3 900 850
- US-A- 3 771 839
- WABCO: Hydraulische Pumpenspeicher- Bremsanlagen (Ausgabe 07.1995) XP002152094

## Beschreibung

Die Erfindung betrifft eine hydraulische Bremsanlage gemäß dem Oberbegriff des Patentanspruchs 1.

Eine solche Bremsanlage, ergänzt um einen zweiten Bremskreis, ist aus der WABCO-Broschüre "Hydraulische Pumpenspeicher-Bremsanlagen", Ausgabe 07.1995, dort insbesondere Seite 12, bekannt. Solche Bremsanlagen sind in radgetragenen Geräten üblich, wobei unter "radgetragene Geräte" alle auf Rädern bewegbaren Transport-, Arbeits- und Zugmaschinen wie Erdbewegungsmaschinen, Verlademaschinen, landwirtschaftliche Fahrzeuge, Schienenfahrzeuge sowie straßengebundene und geländegängige Kraftfahrzeuge zu verstehen sind. Als radgetragen sollen auch auf Gleisketten laufende Geräte, wie beispielsweise Planier- und Laderaupen, gelten, bei denen ja auch Räder die Übertragung von Lasten und (Antriebs-) Kräften auf die Gleisketten übernehmen.

Häufig tritt ein Bedürfnis nach einer von dem Bremsventil unabhängigen Möglichkeit zur Betätigung einer solchen Bremsanlage auf. Beispielsweise besteht ein solches Bedürfnis, wenn ein Bagger oder ein Mobilkran oder ein landwirtschaftlicher Traktor ortsfest eingesetzt werden oder wenn ein Kraftfahrzeug mit einer Anfahrschlupf-Regeleinrichtung und/oder einer Fahrdynamikregeleinrichtung ausgerüstet werden soll.

Der Erfindung liegt die Aufgabe zugrunde, eine hydraulische Bremsanlage der eingangs genannten Art mit einfachen Mitteln so fortzubilden, daß sie eine von ihrem Bremsventil unabhängige Bremsbetätigung ermöglicht.

Diese Aufgabe wird durch die in dem Patentanspruch 1 angegebenen Erfindung gelöst. Vorteilhafte Ausgestaltungen und Weiterbildungen sind in den Unteransprüchen angegeben.

Die Erfindung wird nunmehr unter Angabe weiterer Vorteile in zeichnerisch dargestellten Ausführungsbeispielen erläutert. Unter durchgehender Verwendung gleicher Bezugszeichen für funktionsgleiche Bauelemente zeigen
- Fig. 1: schematisch eine hydraulische Mehrkreisbremsanlage,
- Fig. 2: ausschnittsweise eine Fortbildung der Anlage nach Fig. 1
- Fig. 3: schematisch eine andere hydraulische Mehrkreisbremsanlage

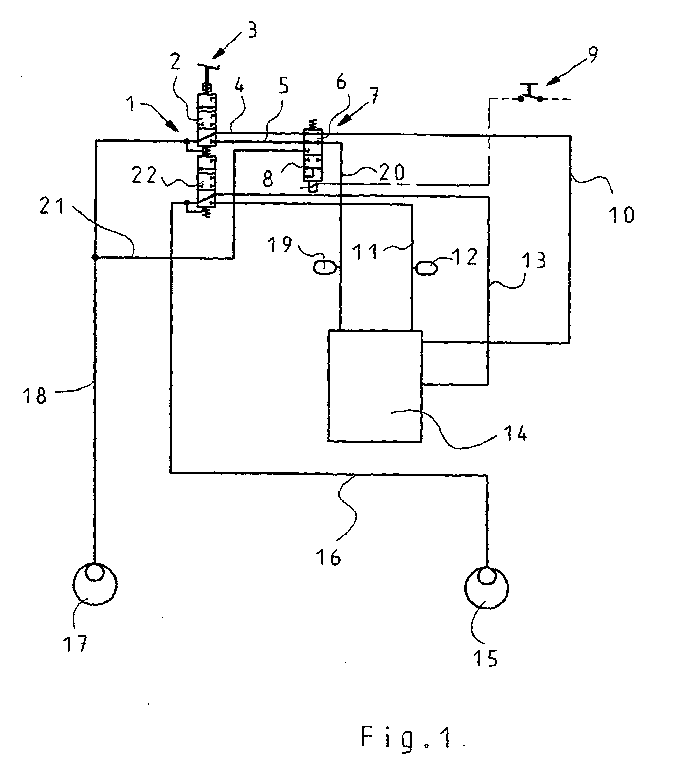

Die in Fig. 1 dargestellte Mehrkreisbremsanlage in zweikreisiger Ausführung weist einen ersten Bremskreis mit einer Vorlaufleitung (5, 20), einem ersten Bremsventilkreis (2), einer Radbremse (17) und einer Rücklaufleitung (4, 10) sowie einen zweiten Bremskreis mit einer Vorlaufleitung (11), einem zweiten Bremsventilkreis (22), einer Radbremse (15) und einer Rücklaufleitung (13) auf. Die Vorlaufleitungen (5, 20 bzw. 11) sind jeweils an einen Druckspeicher (19 bzw. 12) angeschlossen.

Zur Versorgung der Bremsanlage mit Druck dient eine als Kasten mit dem Bezugszeichen (14) angedeutete Druckerzeugungsanlage. In dieser sind in üblicher Weise wenigstens eine Pumpe, wenigstens ein atmosphärischer Rücklaufsammler und für den jeweiligen Einsatzfall erforderliche weitere Einrichtungen wie Bremskreis-Absicherungseinrichtungen und Druckregeleinrichtungen vereinigt.

Die Bremsventilkreise (2, 22) sind zu einem Bremsventil (1) zusammengefaßt. Zwecks Betätigung durch den Bediener weist das Bremsventil (1) ein Betätigungsorgan (3) auf, welches beispielsweise als Pedal ausgebildet sein kann.

Jede Radbremse (17 bzw. 15) kann die einzige des jeweiligen Bremskreises sein, steht aber im Regelfall für mehrere Radbremsen.

Jeder Bremsventilkreis (2 bzw. 22) ist an einem Eingang über die jeweilige Vorlaufleitung (5, 20 bzw. 11) mit einem zugeordneten Lieferanschluß der Druckerzeugungsanlage (14) und dem jeweiligen Druckspeicher (19 bzw. 12) verbunden. An einem Arbeitsausgang ist jeder Bremsventilkreis (2 bzw. 22) über je eine Bremsleitung (18 bzw. 16) mit der jeweiligen Radbremse (17 bzw. 15) verbunden. An einem Rücklaufanschluß ist jeder Bremsventilkreis (2 bzw. 22) mit einem zugeordneten Rücklaufanschluß der Druckerzeugungsanlage (14) verbunden. Der zweite Bremsventilkreis (22) weist außerdem eine hydraulische Steuereinrichtung auf, die an die Bremsleitung (18) des ersten Bremskreises angeschlossen ist. Die dazu erforderliche Verbindung verläuft in der Regel innerhalb des Bremsventils (1).

Zu der Bremsanlage gehört außerdem eine elektrisch betätigbare Ventileinrichtung (7). Deren Betätigungseinrichtung, die in der Regel als Magnet ausgebildet ist, ist zwecks Betätigung der Ventileinrichtung (7) über einen Schalter (9) an eine Stromquelle anschließbar.

Der Schalter kann Bestandteil einer elektrischen Steuereinrichtung sein.

Die Ventileinrichtung (7) enthält drei Durchflußwege. Der erste Durchflußweg ist in der Rücklaufleitung (4, 10) des ersten Bremskreises angeordnet. Der zweite Durchflußweg ist in der Vorlaufleitung (5, 20) des ersten Bremskreises angeordnet. Der dritte Durchflußweg zweigt von dem zweiten Durchflußweg zu einer Umgehungsleitung (21) ab, die parallel zu dem ersten Bremsventilkreis (2) zu der Bremsleitung (18) des ersten Bremskreises führt.

Im nicht betätigten Zustand nimmt die Ventileinrichtung (7) eine Grundstellung (6) ein, in der sie ihre ersten und zweiten Durchflußwege und damit die Vorlaufleitung (5, 20) sowie die Rücklaufleitung (4, 10) des ersten Bremskreises durchgängig hält, während sie ihren dritten Durchflußweg sperrt.

Bei Betätigung nimmt die Ventileinrichtung (7) eine Arbeitsstellung (8) ein, in der sie ihren ersten Durchflußweg und damit die Rücklaufleitung (4, 10) des ersten Bremskreises sperrt, während sie ihre zweiten und dritten Durchflußwege durchgängig hält und damit auch die Bremsleitung (18) über die Umgehungsleitung (21) und die Vorlaufleitung (5, 20) des ersten Bremskreises an die Druckerzeugungsanlage (14) und den Druckspeicher (19) anschließt.

Im Normalbetrieb der Bremsanlage befindet sich die Ventileinrichtung (7) in ihrer Grundstellung (6).

Betätigt der Bediener in dieser Betriebsart das Bremsventil (1) mittels des Betätigungsorgans (3), so läßt der erste Bremsventilkreis (2) aus der zugeordneten Vorlaufleitung (5, 20) einen Bremsdruck in die zugeordnete Bremsleitung (18) und damit zu der Radbremse (17) durch, dessen Wert bis höchstens zum Speicherdruck von der Bedienerkraft auf das Betätigungsorgan (3) und/oder dessen Betätigungsweg abhängt.

Nimmt der Bediener die Bedienerkraft und/oder den Betätigungsweg ganz oder teilweise zurück, so öffnet der erste Bremsventilkreis (2) die Verbindung zwischen der Bremsleitung (18) und der zugeordneten Rücklaufleitung (4, 10), bis der Bremsdruck auf einen der neuen Bedienerkraft und/oder dem neuen Betätigungsweg entsprechenden Wert gefallen ist.

Wie bisher beschrieben, würde die Ventileinrichtung (7) auch wirken, wenn der erste Bremskreis der einzige wäre. Wird der zweite Bremskreis als nicht existent angenommen, steht das Ausführungsbeispiel also auch für eine einkreisige Bremsanlage.

Der jeweilige Bremsdruck in der Bremsleitung (18) wird auch der Steuereinrichtung des zweiten Bremsventilkreises (22) zugeführt, woraufhin dieser aus der zugeordneten Vorlaufleitung (11) einen Bremsdruck in die zugeordnete Bremsleitung (16) und damit zu der Radbremse (15) durchläßt bzw. Bremsdruck aus dieser Bremsleitung (16) in die zugeordnete Rücklaufleitung (13) abläßt. Der Bremsdruck des zweiten Bremskreises kann, je nach seiner Bauart, dem Bremsdruck des ersten Bremskreises gleich oder diesem gegenüber gemindert oder, soweit der Speicherdruck dies zuläßt, erhöht sein. Der zweite Bremskreis läßt sich also ohne zusätzlichen Aufwand durch die Ventileinrichtung (7) mitbetätigen.

Die erläuterte Funktionsweise des Bremsventils (1) kann in Kurzform so beschrieben werden, daß der erste Bremsventilkreis von dem Bediener direkt betätigt wird, während der zweite Bremsventilkreis von dem ersten Bremsventilkreis hydraulisch mitgesteuert wird.

Nun sei angenommen, das Bremsventil (1) sei unbetätigt. Betätigt jetzt der Bediener durch Schließen des Schalters (9) die Ventileinrichtung (7), so läßt diese in ihrer Sperrstellung (8) über ihren dritten Durchflußweg den vollen Speicherdruck aus der Vorlaufleitung (5, 20) des ersten Bremskreises in die Umgehungsleitung (21) und damit in die Bremsleitung (18) und die Radbremse (17) des ersten Bremskreises durch. Dieser Druck steuert wieder den zweiten Bremsventilkreis (22) mit, so daß dieser, je nach seiner Bauart, einen gleich hohen oder einen entsprechenden Bremsdruck aus der ihm zugeordneten Vorlaufleitung (11) in die zugeordnete Bremsleitung (16) und damit in die Radbremse (15) durchläßt.

Die Ventileinrichtung (7) versetzt den Bediener also in die Lage, die Bremsanlage unabhängig von dem Bremsventil (1) zu betätigen. Das mit der Bremsanlage ausgerüstete Gerät kann deshalb unabhängig von dem Bremsventil (1) im Stillstand gehalten werden, so daß der Bediener bei der Ausführung anderer Arbeitsgänge von der Betätigung des Bremsventils (1) entlastet wird.

Betätigt der Bediener nun zusätzlich das Bremsventil (1), so zeigt dies keine Wirkung. Sind die Radbremsen (15, 17) beim Betätigen der Ventileinrichtung (7) durch das Bremsventil mit einem Bremsdruck unterhalb des Speicherdrucks betätigt, so wird diese Betätigung durch die Betätigung mittels der Ventileinrichtung (7) abgelöst.

Das Sperren der Rücklaufleitung (4, 10) bei Betätigung der Bremsanlage mittels der Ventileinrichtung (7) ist erforderlich, damit sich bei dieser Betätigung in den Radbremsen (15, 17) und den zugehörigen Bremsleitungen (16, 18) überhaupt ein Druck aufbauen kann. Würde die Rücklaufleitung (4, 10) nicht gesperrt, würde der erste Bremskreis unwirksam, weil dann über den bei dieser Betriebsart sozusagen "rückwärts" beaufschlagten ersten Bremsventilkreis ein Kurzschluß in diesem Bremskreis mit vollständigem Druckverlust aufträte. Infolge der Unwirksamkeit des ersten Bremskreises wäre auch der zweite Bremskreis unwirksam, weil keine Möglichkeit zu seiner Mitsteuerung bestünde.

Die "rückwärtige" Beaufschlagung des ersten Bremsventilkreises (2) kann bei einigen üblichen Bauarten des Bremsventils (1) zu Störungen führen (z. B. Herausschieben eines Regelkolbens). Gegen solche Störungen muß im Bedarfsfall Vorsorge getroffen werden (z. B. durch einen Anschlag für den Regelkolben).

Übrigens können die Rücklaufleitungen (4, 10 bzw. 13) beider Bremskreise stromaufwärts (also auch innerhalb des Bremsventils (1)), oder stromabwärts der Ventileinrichtung (7) zusammengefaßt werden.

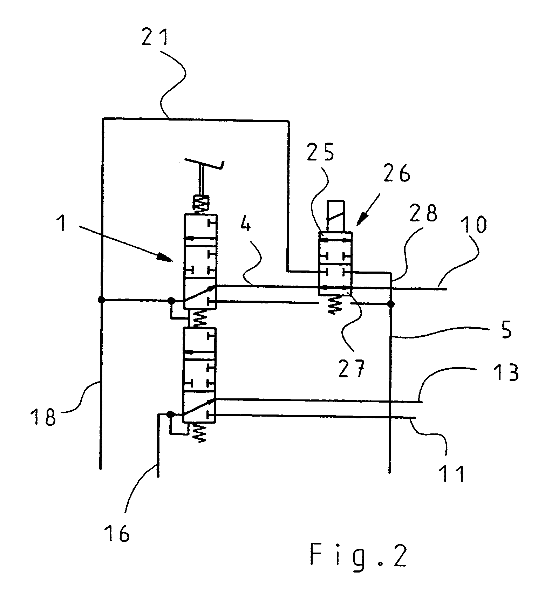

In der ausschnittsweise in Fig. 2 dargestellten Fortbildung der Bremsanlage ist die Ventileinrichtung (7) durch eine Ventileinrichtung (26) mit zwei Durchflußwegen ersetzt. Der erste Durchflußweg ist wieder in der Rücklaufleitung (4, 10) des ersten Bremskreises angeordnet. Der zweite Durchflußweg ist zwischen einer Leitung (28) und der Umgehungsleitung (21) angeordnet. Die Leitung (28) zweigt von der Vorlaufleitung (5, 20) des ersten Bremskreises ab.

In ihrer Grundstellung (27) hält die Ventileinrichtung (26) ihren ersten Durchflußweg und damit die Rücklaufleitung (4, 10) durchgängig, während sie ihren zweiten Durchflußweg sperrt. In ihrer Arbeitsstellung (25) sperrt die Ventileinrichtung (26) den ersten Durchflußweg und damit die Rücklaufleitung (4, 10), während sie ihren zweiten Durchflußweg durchgängig hält und damit die Umgehungsleitung (21) über die Leitung (28) und die Vorlaufleitung (5, 20) an die Druckerzeugungseinrichtung (14) und den Druckspeicher (19) anschließt mit den gleichen Auswirkungen, wie oben beschrieben, auf die Betätigung der Bremsanlage.

Während die Ventileinrichtung (7) der Fig. 1 ein 5/2-Wegeventil darstellt, ist die Ventileinrichtung (26) ein 4/2-Wegeventil.

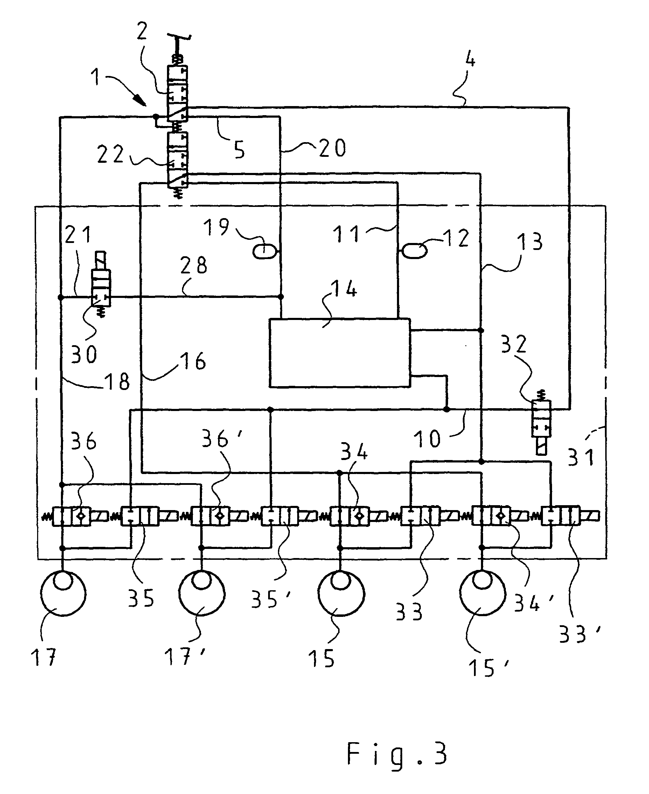

Fig. 3 zeigt eine Bremsanlage in zweikreisiger Ausführung, die in jedem Bremskreis zwei Radbremsen (17, 17' bzw. 15, 15') aufweist. Die von den Bremsventilkreisen (2, 22) ausgehenden Bremsleitungen (18, 16) verzweigen sich zu den einzelnen Radbremsen, wobei die Verzweigung der Bremsleitung (18) des ersten Bremskreises stromabwärts der Einmündung der Umgehungsleitung (21) liegt

Auch von den Rücklaufleitungen (4, 10 bzw. 13) gehen Zweigleitungen zu den einzelnen Radbremsen (17, 17' bzw. 15, 15') des jeweiligen Bremskreises.

Den einzelnen Radbremsen (15, 15', 17, 17') sind Regelventileinrichtungen (33, 34 bzw. 33', 34' bzw. 35, 36 bzw. 35', 36') vorgeordnet. Diese sind für die Radbremsen eines Bremskreises oder für alle Radbremsen gleich aufgebaut.

Die Regelventileinrichtungen (33 bis 36') sind in der Lage, je nach elektrischer Ansteuerung die jeweils zugeordnete Radbremse (15, 15', 17, 17') mit der jeweiligen Bremsleitung (16 bzw. 18) oder mit der jeweiligen Rücklaufleitung (4, 10 bzw. 13) zu verbinden oder beide Verbindungen zu sperren. Solche Regelventileinrichtungen sind in blockiergeschützten Fahrzeugbremsanlagen als Blockierschutzventile (ABS-Ventile) gebräuchlich und beispielsweise aus der EP-B-0 355 324 bekannt.

Die in dieser Bremsanlage mit (30, 32) zu bezeichnende Ventileinrichtung ist in zwei 2/2-Wegeventile (30 und 32) aufgelöst. Der Durchflußweg des einen 2/2-Wegeventils (30) ist zwischen der von der Vorlaufleitung (5, 20) abzweigenden Leitung (28) und der Umgehungsleitung (21) angeordnet, während der Durchflußweg des zweiten 2/2-Wegeventils (32) in der Rücklaufleitung (4, 10) angeordnet ist. Die Stellungen der 2/2-Wegeventile (30 und 32) sind nicht näher bezeichnet. Wie aber aus der Darstellung hervorgeht, ist die Grundstellung des einen 2/2-Wegeventils (30) eine Sperrstellung und seine Arbeitsstellung eine Durchgangsstellung, während die Grundstellung des zweiten 2/2-Wegeventils (32) eine Durchgangsstellung und seine Arbeitsstellung eine Sperrstellung sind. Die Verzweigung der Rücklaufleitung (4, 10) zu den zugeordneten Radbremsen (17, 17') muß stromabwärts des zweiten 2/2-Wegeventils (32) liegen.

Zur Betätigung der Bremsanlage durch die Ventileinrichtung (30, 32) müssen beide 2/2-Wegeventile (30, 32) gleichzeitig betätigt, d. h. in ihre Arbeitsstellungen umgestellt, werden. Diese Lösung bietet den Vorteil, daß die 2/2-Wegeventile oder wenigstens Teile derselben der Großserienfertigung der ABS-Ventile entnommen werden können und entsprechend kostengünstig sind.

Durch einen strichpunktierten Linienzug (31) ist angedeutet, daß alle oder einige der von ihm umfaßten Anlagenbestandteile in einer bzw. mehreren Baugruppen zusammengefaßt sein können.

Die Regelventileinrichtungen (33 bis 36') ermöglichen in bekannter Weise, den der jeweils zugeordneten Radbremse (15, 15', 17, 17') zugeführten Bremsdruck zwischen dem Atmosphärendruck und dem von dem Bremsventil (1) durchgelassenen Bremsdruck einzustellen und sie somit individuell abgestuft einzusetzen.

Die gleiche Möglichkeit, allerdings mit dem Wert des Speicherdrucks als Obergrenze, bieten die Regelventileinrichtungen (33 bis 36') bei Betätigung der Ventileinrichtung (30, 32).

Diese Bremsanlage kann daher vorteilhaft in solchen Fällen eingesetzt werden, in denen die Radbremsen unabhängig von dem Bedienerwillen individuell einsetzbar sein müssen.

Beispiele für solche Fälle bieten Kraftfahrzeuge mit Anfahrschlupfregelung (ASR) und/oder Fahrdynamikregelung (FDR). In solchen Kraftfahrzeugen wird die Ventileinrichtung (30, 32) auch oder ausschließlich abhängig von bestimmten Fahrzuständen durch eine Steuerelektronik betätigt, während die Regelventileinrichtungen (33 bis 36') die Zuteilung und Bemessung von Bremsdruck zu einer oder mehreren Radbremsen, ebenfalls abhängig von den Fahrzuständen, vornehmen und dadurch die jeweilige(n) eine oder mehrere Radbremsen abgestuft zum Einsatz bringen. Dabei sind alle geeigneten Mittel zur Bremsdrucksteuerung sowie der dazugehörigen Sensorik einsetzbar.

Näheres zu ASR und FDR kann der WO 96/35598 bzw. dem Aufsatz "Das neue Fahrsicherheitssystem Electronic Stability Program von Mercedes-Benz" in ATZ 96 (1994) Heft 11, entnommen werden.

Die vorstehend zum zweiten Bremskreis gemachten Ausführungen gelten für den Fall des Vorhandenseins eines oder weiterer Bremskreise direkt oder entsprechend mit, sofern deren Bremsventilkreis(e) von dem ersten Bremsventilkreis hydraulisch mitgesteuert werden.

In nicht dargestellter Weise können auch ein oder mehrere Bremskreise so ausgebildet sein, daß allen Radbremsen eine gemeinsame Regelventileinrichtung vorgeordnet ist. Es wäre beispielsweise denkbar, daß nur den Radbremsen eines einer angetriebenen Achse zugeordneten Bremskreises getrennte Regelventileinrichtungen vorgeordnet sind. Eine ASR wäre dadurch nicht beeinträchtigt.

Alle Ventileinrichtungen sind in den Fig. mit Grundsymbolen und Funktionssymbolen nach der Internationalen Norm ISO 1219 dargestellt. Konstruktiv ausgestaltete derartige Ventileinrichtungen sind dem Fachmann geläufig bzw. von ihm problemlos ausführbar. Wegen beispielhafter Ausgestaltungen einiger dieser Ventileinrichtung wird auf die bereits erwähnte WABCO-Broschüre "Hydraulische Pumpenspeicher-Bremsanlagen" verwiesen.

Im übrigen gelten die vorstehend zu einem Ausführungsbeispiel gemachten Ausführungen für die anderen Ausführungsbeispiele mit, sofern sich aus diesen Ausführungen nichts Widersprechendes ergibt. Insbesondere sind die Ventileinrichtungen der einzelnen Ausführungsbeispiele direkt oder mit dem Fachmann geläufigen Anpassungen untereinander austauschbar.

Der Fachmann erkennt schließlich, daß die Ausführungsbeispiele den Schutzbereich der Erfindung nicht erschöpfend beschreiben und daß dieser vielmehr alle Ausgestaltungen umfaßt, deren Merkmale sich den Patentansprüchen unterordnen.

## Patentansprüche

1. Hydraulische Bremsanlage für ein radgetragenes Gerät mit einem Bremskreis, der eine Vorlaufleitung (5, 20), einen Bremsventilkreis (2), eine Bremsleitung (18), eine Rücklaufleitung (4, 10) und wenigstens eine Radbremse (17), an welche die Bremsleitung (18) angeschlossen ist, aufweist, worin letztere Radbremse (17) von dem Bremsventilkreis (2) alternativ mit der Vorlaufleitung (5, 20) oder der Rücklaufleitung (4, 10) verbindbar ist,
**gekennzeichnet durch**
eine elektrisch betätigbare Ventileinrichtung (7; 26, 30, 32), die im betätigten Zustand die wenigstens eine Radbremse (17) über eine Umgehungsleitung (21) parallel zu dem Bremsventilkreis (2) mit der Vorlaufleitung (5, 20) verbindet und die Rücklaufleitung (4, 10) sperrt.

2. Hydraulische Bremsanlage nach Anspruch 1,
**dadurch gekennzeichnet,**
**daß** der wenigstens einen Radbremse (17) des Bremskreises stromabwärts des Bremsventilkreises (2) und der elektrisch betätigbaren Ventileinrichtung (7; ,26; 30, 32) eine elektrisch betätigbare Regelventileinrichtung (35, 36) vorgeordnet ist.

3. Hydraulische Bremsanlage nach Anspruch 1, worin der Bremskreis wenigstens zwei Radbremsen (17, 17') aufweist,
**dadurch gekennzeichnet,**
**daß** stromabwärts des Bremsventilkreises (2) und der elektrisch betätigbaren Ventileinrichtung (7; 26; 30, 32) jeder Radbremse (17 bzw. 17') des Bremskreises eine elektrisch betätigbare Regelventileinrichtung (35, 36 bzw. 35', 36') vorgeordnet ist.

4. Hydraulische Bremsanlage nach einem der vorhergehenden Ansprüche,
**gekennzeichnet durch**
wenigstens einen weiteren Bremskreis mit einer Vorlaufleitung (11), einem Bremsventilkreis (22), einer Rücklaufleitung (13) und wenigstens einer Radbremsen (15), worin der Bremsventilkreis (22) des wenigstens einen weiteren Bremskreises von dem Bremsventilkreis (2) des ersten Bremskreises hydraulisch mitgesteuert und die wenigstens eine Radbremse (15) des weiteren Bremskreises von dem zugeordneten Bremsventilkreis (22) alternativ mit der zugeordneten Vorlaufleitung (11) oder der zugeordneten Rücklaufleitung (13) verbindbar ist.

5. Hydraulische Bremsanlage nach Anspruch 4,
**dadurch gekennzeichnet,**
**daß** der wenigstens einen Radbremse (15) des wenigstens einen weiteren Bremskreises stromabwärts des zugeordneten Bremsventilkreises (22) eine elektrisch betätigbare Regelventileinrichtung (33, 34) vorgeordnet ist.

6. Hydraulische Bremsanlage nach Anspruch 4, worin wenigstens einer der weiteren Bremskreise wenigstens zwei Radbremsen (15, 15') aufweist,
**dadurch gekennzeichnet,**
**daß** stromabwärts des zugeordneten Bremsventilkreises (22) jeder Radbremse (15 bzw. 15') dieses Bremskreises eine elektrisch betätigbare Regelventileinrichtung (33, 34 bzw. 33', 34') vorgeordnet ist.

## Claims

1. A hydraulic brake system for a wheeled apparatus having a brake circuit comprising a supply line (5, 20), a brake valve circuit (2), a brake line (18), a return line (4, 10) and at least one wheel brake (17) to which the brake line (18) is attached, wherein the latter wheel brake (17) is arranged to be connected by the brake valve circuit (2) either to the supply line (5, 20) or to the return line (4, 10), **characterised by** an electrically operable valve arrangement (7, 26, 30, 32), which in the operated state connects the at least one wheel brake (17) via a bypass line (21) parallel to the brake valve circuit (2) to the supply line (5, 20) and blocks the return line (4, 10).

2. A hydraulic brake system according to claim 1, **characterised in that** an electrically operable control valve arrangement (35, 36) is arranged upstream of the at least one wheel brake (17) of the brake circuit downstream of the brake valve circuit (2) and the electrically operable valve arrangement (7; 26; 30, 32).

3. A hydraulic brake system according to claim 1, wherein the brake circuit comprises a least two wheel brakes (17, 17'), **characterised in that** downstream of the brake valve circuit (2) and the electrically operable valve arrangement (7; 26; 30, 32), an electrically operable control valve arrangement (35, 36, 35', 36) is arranged upstream of each wheel brake (17, 17') of the brake circuit.

4. A hydraulic brake system according to any one of the preceding claims, **characterised by** at least one further brake circuit with a supply line (11), a brake valve circuit (22), a return line (13) and at least one wheel brake (15), wherein the brake valve circuit (22) of the at least one further brake circuit is hydraulically co-controlled by the brake valve circuit (2) of the first brake circuit, and the at least one wheel brake (15) of the further brake circuit is arranged to be connected by the associated brake valve circuit (22) either to the associated supply line (11) or to the associated return line (13).

5. A hydraulic brake system according to claim 4, **characterised in that** an electrically operable control valve arrangement (33, 34) is arranged upstream of the at least one wheel brake (15) of the at least one further brake circuit downstream of the associated brake valve circuit (22).

6. A hydraulic brake system according to claim 4, wherein at least one of the further brake circuits has at least two wheel brakes (15, 15'), **characterised in that** downstream of the associated brake valve circuit (22) an electrically operable control valve arrangement (33, 34, 33', 34') is arranged upstream of each wheel brake (15, 15') of this brake circuit.

## Revendications

1. Système de freinage hydraulique pour un véhicule sur roues équipé d'un système de freinage, qui présente une conduite d'aller (5, 20), un circuit de robinet de freinage (2), une conduite de frein (18), une conduite de retour (4, 10) et au moins un frein sur roues (17), auquel la conduit de freinage (18) est reliée, dans lequel le dernier frein sur roues (17) peut être relié par le circuit de robinet de freinage (2) alternativement avec la conduite d'aller (5, 20) ou la conduite de retour (4, 10),
**caractérisé par**
un dispositif de soupape actionnable électriquement (7, 26, 30, 32), qui relie dans l'état actionné au moins un frein sur roues (17) par l'intermédiaire d'une conduite de dérivation (21) parallèlement au circuit de robinet de freinage (2) à la conduite d'aller (5, 20) et bloque la conduite de retour (4, 10).

2. Système de freinage hydraulique selon la revendication 1, **caractérisé en ce qu'**un dispositif de soupape de réglage actionnable électriquement (35, 36) est placé en amont d'au moins un frein sur roues (17) du circuit de freinage en aval du circuit de robinet de freinage (2) et du dispositif de soupape actionnable électriquement (7 ; 26; 30, 32).

3. Système de freinage hydraulique selon la revendication 1, dans lequel le circuit de freinage présente au moins deux freins sur roues (17, 17')
**caractérisé en ce que**
un dispositif de soupape de réglage actionnable électriquement (35, 36 ou 35', 36') est placé en amont de chaque frein sur roues (17 ou 17') du circuit de freinage en aval du circuit de robinet de freinage (2) et du dispositif de soupape actionnable électriquement (7 ; 26 ; 30, 32).

4. Système de freinage hydraulique selon l'une des revendications précédentes,
**caractérisé par**
au moins un autre circuit de freinage avec une conduite d'aller (11), un circuit de robinet de freinage (22), une conduite de retour (13) et au moins un frein sur roues (15), dans lequel le circuit de robinet de freinage (22) du au moins un autre circuit de freinage est commandé hydrauliquement par le circuit de robinet de freinage (2) du premier circuit de freinage et au moins un frein sur roues (15) de l'autre circuit de freinage peut être relié par le circuit de robinet de freinage associé (22) alternativement avec la conduite d'aller associée (11) ou la conduite de retour associée (13).

5. Système de freinage hydraulique selon la revendication 4,
**caractérisé en ce qu'**un dispositif de soupape de réglage actionnable électriquement (33, 34) est placé en amont d'au moins un frein sur roues (15) du au moins un autre circuit de freinage en aval du circuit de robinet de freinage associé (22).

6. Système de freinage hydraulique selon la revendication 14, dans lequel au moins un des autres circuits de freinage présent au moins deux freins sur roues (15, 15'),
**caractérisé en ce qu'**un dispositif de soupape de réglage actionnable électriquement (33, 34 ou 33', 34') est placé en mont de chaque frein sur roues (15 ou 15') de ce circuit de freinage en aval du circuit de robinet de freinage associé (22).
